# FASCICULE DE BREVET EUROPEEN

(11) **EP 1 317 333 B1**
(45) Date de publication et mention de la délivrance du brevet: **30.07.2008**
(21) Numéro de dépôt: 01972151.3
(22) Date de dépôt: 12.09.2001
(51) Int. Cl.: B25J 19/00, B60L 5/28

(54) **DISPOSITIF D'EQUILIBRAGE D'UNE FORCE, A HAUTES PERFORMANCES**
HOCHLEISTUNGSVORRICHTUNG ZUM KRAFTAUSGLEICH
HIGH PERFORMANCE DEVICE FOR BALANCING A FORCE

(30) Priorité: 14.09.2000 FR 0011733; 01.12.2000 FR 0015586
(43) Date de publication de la demande: 11.06.2003
(73) Titulaire: Salesse, Christian, 07100 Annonay (FR); Loriot, Jean-Marc, F-75015 Paris (FR)
(72) Inventeur: Salesse, Christian, 07100 Annonay (FR); Loriot, Jean-Marc, F-75015 Paris (FR)
(74) Mandataire: Bezault, Jean
(86) Numéro de dépôt international: PCT/FR2001/002835
(87) Numéro de publication internationale: WO 2002/022322

(56) Documents cités:
- FR-A- 2 483 300
- FR-A- 2 608 959
- FR-A- 2 627 718
- FR-A- 2 637 832
- FR-E- 27 768
- JP-A- 57 132 988

## Description

L'invention concerne un dispositif d'équilibrage d'une force propre à guider une charge sur une trajectoire donnée, en particulier une trajectoire linéaire.

On connaît déjà des dispositifs d'équilibrage de ce type qui comprennent un mécanisme articulé formé d'un bras proximal porté par un support et calé sur un premier axe de rotation et d'un bras distal porté par le bras proximal et calé autour d'un deuxième axe de rotation qui s'étend parallèlement au premier axe, et dans lequel le bras distal a une extrémité libre qui porte une charge.

Un dispositif d'équilibrage à deux bras articulés de ce type possède de multiples applications, notamment dans le domaine des manipulateurs, des dispositifs de transfert, etc. Il peut être aussi utilisé en tant que pantographe, notamment pantographe ferroviaire pour les locomotives électriques.

On connaît déjà différentes solutions pour équilibrer la charge que porte le mécanisme articulé.

Tout d'abord, on connaît des solutions pneumatiques utilisant un vérin qui assure la suspension de la charge et/ou son déplacement, par exemple en direction verticale.

De telles solutions, si elles donnent des résultats relativement satisfaisants pour de faibles charges, deviennent impossibles à gérer dès que le volume d'air du vérin dépasse environ 1 dm³. Ceci est dû aux pertes de charges qui engendrent des variations de pression entre les différents points du circuit, ainsi qu'à la compressibilité de l'air. De tels moyens pneumatiques ont pour inconvénient d'avoir un temps de réponse qui est de l'ordre de la seconde, ce qui correspond à une valeur de bande passante médiocre, c'est-à-dire un temps trop important pour ne pas être ressenti par un opérateur notamment.

On connaît aussi des solutions mixtes dans lesquelles un système pneumatique est accouplé à un contrepoids. Ces solutions, qui conduisent aux mêmes résultats que les solutions précédentes, présentent en plus l'inconvénient d'une augmentation importante de l'inertie, ce qui peut même en plus pénaliser les mouvements horizontaux de la charge.

De plus, on connaît des solutions électriques qui impliquent généralement d'utiliser des sortes de palans à réglage de charge automatique. Ces solutions ont les inconvénients, d'une part, des systèmes sophistiqués (risque de panne) et, d'autre part, de nécessiter une phase de pesage pendant laquelle la charge n'est pas contrôlée et peut être dangereuse pour l'opérateur. En outre, ces solutions ont pour inconvénient d'avoir un temps de réponse important, incompatible en pratique avec un bon confort de manipulation, du fait que leur bande passante est faible. Ceci s'applique notamment si ce déplacement nécessite le contrôle d'une position non matérialisée, donc la présence d'une boucle de position.

Par ailleurs, on connaît des solutions utilisant un parallélogramme, comme défini dans la demande de brevet français n° 00 03047 (publiée sous le n° FR2806025), qui ont pour inconvénients, d'une part, soit de n'assurer aucun guidage (comme c'est le cas du câble), soit d'obliger à une trajectoire en arc de cercle dans un plan vertical, et d'autre part de concentrer tous les efforts liés au poids sur un seul bras du parallélogramme. La solution décrite dans le brevet français N° 96 07556 utilise un parallélogramme, mais ne comporte aucun moyen de coordination. On ne peut donc présumer de la bande passante de l'ensemble, quelle que soit la qualité des moyens d'équilibrage.

L'invention a notamment pour but de surmonter les inconvénients précités.

Elle vise en particulier à procurer un dispositif d'équilibrage d'une force, à hautes performances, qui permet de guider une charge sur une trajectoire, et cela avec une bande passante élevée.

Elle propose à cet effet un dispositif d'équilibrage d'une force, du type défini en introduction, lequel comprend des premiers moyens d'équilibrage à forte bande passante ayant un premier axe de sortie et agissant sur le bras proximal, des seconds moyens d'équilibrage à forte bande passante ayant un deuxième axe de sortie et agissant sur le bras distal, ainsi que des moyens de coordination à forte bande passante, interposés entre les premiers moyens d'équilibrage et les seconds moyens d'équilibrage pour coordonner les mouvements de rotation respectifs du bras proximal et du bras distal.

Ainsi, l'invention permet d'équilibrer séparément le bras proximal et le bras distal du mécanisme articulé, et cela grâce à des premiers moyens d'équilibrage et des seconds moyens d'équilibrage qui sont coordonnés entre eux. Ceci permet de minimiser les inerties ramenées au système d'équilibrage et les élasticités de transmission du bras proximal et du bras distal.

Ces moyens d'équilibrage ont une forte bande passante, ce qui signifie une bande passante de l'ordre d'une centaine de Hertz, et cela sans rajout de frottements et d'inerties appréciables.

Pour mémoire, la bande passante traduit l'aptitude d'un système mécanique à réagir à des phénomènes transitoires. Dans les faits, ceci traduit l'aptitude dudit système à conserver ses performances pour des sollicitations qui, dans le cas présent, peuvent être de l'ordre d'une centaine de Hertz, ce qui peut aussi se définir comme un temps de réponse de l'ordre du centième de seconde.

Dans le cadre de l'invention, on peut utiliser différents types de moyens d'équilibrage, y compris dans certains cas des moyens de motorisation.

Dans une forme de réalisation préférée de l'invention, le dispositif comprend un équilibreur propre à procurer un couple mécanique sinusoïdal et ayant deux axes de sorties qui ont des vitesses de rotation synchronisées mais de sens opposés, et dans lequel ces deux axes de sortie sont liés en rotation respectivement avec le premier axe de rotation du bras proximal et avec le deuxième axe de rotation du bras distal.

A titre d'exemple, un tel équilibreur peut être du type décrit dans le brevet français n° 88 02 423 (publié sous le n° 2 627 718).

Un tel équilibreur connu, qui est purement mécanique, est utilisé généralement pour équilibrer les forces agissant sur un bras sollicité par une charge, telle qu'un outil. Il permet d'obtenir un équilibrage rigoureux du bras, quelle que soit sa position angulaire, et peut pivoter de 360°, permettant à la charge de décrire une trajectoire circulaire.

Cet équilibreur connu offre l'avantage de fournir un couple sinusoïdal avec un excellent rendement et une bande passante élevée, c'est à dire un équilibrage mécanique à faible temps de réponse.

Ainsi, lorsque les deux axes de sortie de l'équilibreur sont liés en rotation respectivement avec l'axe de rotation du bras proximal et l'axe de rotation du bras distal, le dispositif d'équilibrage selon l'invention assure un déplacement synchrone des deux bras permettant une manoeuvre unique de la charge, et cela quelle que soit la répartition des charges sur chacun des deux bras du mécanisme articulé.

De manière préférentielle, l'un des deux axes de sortie de l'équilibreur constitue l'axe de rotation du bras proximal, tandis que l'autre axe de sortie est couplé à l'axe de rotation du bras distal par des moyens de transmission.

Pour cela, on peut faire appel à différents moyens mécaniques, en particulier à des moyens ayant au moins un parallélogramme déformable.

Selon une autre caractéristique de l'invention, le bras proximal et le bras distal ont une même longueur.

Il en résulte que la charge peut se déplacer alors sur une trajectoire rectiligne avec une amplitude de mouvement correspondant à quatre fois la longueur de chacun des bras précités.

Selon une autre caractéristique de l'invention, le dispositif comprend une motorisation additionnelle formée d'au moins un actionneur couplé à au moins un organe mobile du dispositif.

Une telle motorisation peut être utilisée à différentes fins, notamment pour déplacer le mécanisme articulé de l'une à l'autre de deux positions qui comprennent une position de service et une position de rangement.

De préférence, ces moyens de réglage comprennent une masse déplaçable sur le bras proximal ou le bras distal.

L'invention prévoit aussi que le dispositif peut comprendre une motorisation additionnelle, commandée par un capteur d'effort placé en un endroit choisi pour permettre, soit d'assister un opérateur dans le cas d'un déplacement manuel, soit d'assurer une force constante sur un organe donné.

Dans une application préférentielle de l'invention, l'extrémité libre du bras distal porte les archets d'un pantographe ferroviaire propres à capter l'énergie électrique d'une caténaire, en sorte que la charge est ici formée par la force qu'exercent les archets sur la caténaire.

Dans le cas de l'application à un pantographe ferroviaire, il est avantageux que le dispositif comprenne au moins un accessoire, notamment un aileron, qui est monté solidaire en rotation du deuxième axe de sortie, en étant soit monté sur ce deuxième de sortie soit monté fou sur le premier axe de sortie, qui possède une géométrie choisie et qui se déplace parallèlement au bras distal, dont il est aussi solidaire en rotation, cet accessoire étant disposé sur un rayon de giration tel que sa pénétration dans l'air génère un couple égal et opposé au couple de pénétration dans l'air du mécanisme articulé (c'est-à-dire ici du pantographe), ces deux couples s'annulant dans la mécanique de liaison. On réalise ainsi un pantographe qui est insensible à la vitesse du vent.

Comme indiqué précédemment, les moyens d'équilibrage de l'invention peuvent, en variante, comprendre des moyens de motorisation.

Dans une autre forme de réalisation, notamment destinée à un pantographe ferroviaire, une motorisation d'asservissement permet de fournir les efforts inertiels liés au déplacement, sur l'axe vertical, de l'ensemble de la structure. Ceci a pour but d'éviter que l'effort produit par les archets sur la caténaire ne soit pas perturbé par ces déplacements. Cette motorisation d'asservissement sera par ailleurs à même de compenser l'imperfection du couple défini par l'aileron mentionné ci-dessus, voire de pallier son absence. Cette motorisation comprend un moteur électrique couplé à une vis sans fin coopérant avec un écrou, cet écrou étant porté par une manivelle couplée à l'un du premier axe de sortie et du deuxième axe de sortie, des moyens d'asservissement étant prévus pour contrôler le moteur électrique à partir d'un signal de commande délivré par un capteur d'effort porté à l'extrémité libre du bras distal.

La vis sans fin est avantageusement une vis réversible entraînée par le moteur électrique par l'intermédiaire d'un réducteur, un mécanisme d'embrayage étant intercalé entre le réducteur et la vis sans fin.

La présence de ce réducteur permet de mettre une vis sans fin à grand pas, réversible et à haut rendement inverse. Cependant, il est envisageable aussi d'utiliser une vis à pas plus faible, mais sans la présence d'un réducteur.

Avantageusement, les moyens d'asservissement comprennent une dynamo tachymétrique entraînée par le moteur électrique et propre à délivrer un signal de vitesse, un premier amplificateur opérationnel (boucle de vitesse) recevant ce signal de vitesse et produisant un premier signal de sortie, un deuxième amplificateur opérationnel (boucle de courant) recevant le premier signal de sortie et délivrant un deuxième signal de sortie, un amplificateur de puissance recevant ce deuxième signal de sortie et délivrant un courant de sortie envoyé au moteur électrique et dont l'image de ce courant de sortie est envoyée au deuxième amplificateur opérationnel, le signal de commande délivré par le capteur d'effort étant appliqué à l'entrée du deuxième amplificateur opérationnel (boucle de courant).

Il est avantageux aussi que la motorisation d'asservissement puisse aussi être utilisée comme un système de servitude afin d'assurer le déploiement et le repliement.

Ce mécanisme de déploiement et repliement trouve un intérêt tout particulier dans le cas où l'extrémité libre du bras distal porte les archets d'un pantographe ferroviaire.

De préférence, ce mécanisme est propre à recevoir un signal de commande appliqué au premier amplificateur opérationnel (boucle de vitesse) pour réaliser le repliement ou le déploiement du mécanisme articulé. Ce signal sera alors prioritaire sur le signal du capteur d'effort ramené à la boucle de courant.

Il est avantageux aussi que ce mécanisme puisse recevoir un signal d'urgence appliqué au premier amplificateur opérationnel (boucle de vitesse) pour réaliser le repliement du mécanisme articulé en cas d'urgence. Ce signal sera également prioritaire sur le signal du capteur d'effort ramené à la boucle de courant.

Cette priorité de la boucle de vitesse par rapport à la boucle de courant vaut chaque fois que l'effort des archets sur la caténaire disparaît pendant un temps significatif.

Selon encore une autre caractéristique de l'invention, les moyens d'asservissement comprennent des moyens correctifs propres à effectuer un correctif entre le signal de commande délivré par le capteur d'effort et l'effort réel s'exerçant sur la charge, ceci afin de compenser les efforts inertiels liés à la mécanique placée en aval du capteur, notamment à la masse des archets dans le cas d'un pantographe ferroviaire. Ces moyens correctifs comprennent des moyens dérivateurs propres à dériver par rapport au temps les variations de vitesse prélevées sur la dynamo tachymétrique et à les appliquer à l'entrée du deuxième amplificateur opérationnel.

Un autre système d'entraînement de servitude, distinct du système décrit précédemment, assurera le repli du pantographe en cas de panne de ce premier système.

Dans la description qui suit, faite seulement à titre d'exemple, on se réfère aux dessins annexés, sur lesquels :
- la figure 1 est un schéma d'un dispositif d'équilibrage selon une première forme de réalisation de l'invention ;
- la figure 2 est un schéma d'un dispositif d'équilibrage selon une deuxième forme de réalisation de l'invention ;
- la figure 3 est une vue de côté d'un dispositif d'équilibrage selon une troisième forme de réalisation de l'invention appliqué à un pantographe ferroviaire ;
- la figure 4 est une vue de face correspondant à la figure 3 ;
- la figure 5 représente des moyens de motorisation selon l'invention;
- la figure 6 est une vue analogue à la figure 3 intégrant les moyens de motorisation de la figure 5; et
- la figure 7 représente un circuit d'asservissement faisant partie des moyens de motorisation des figures 5 et 6.

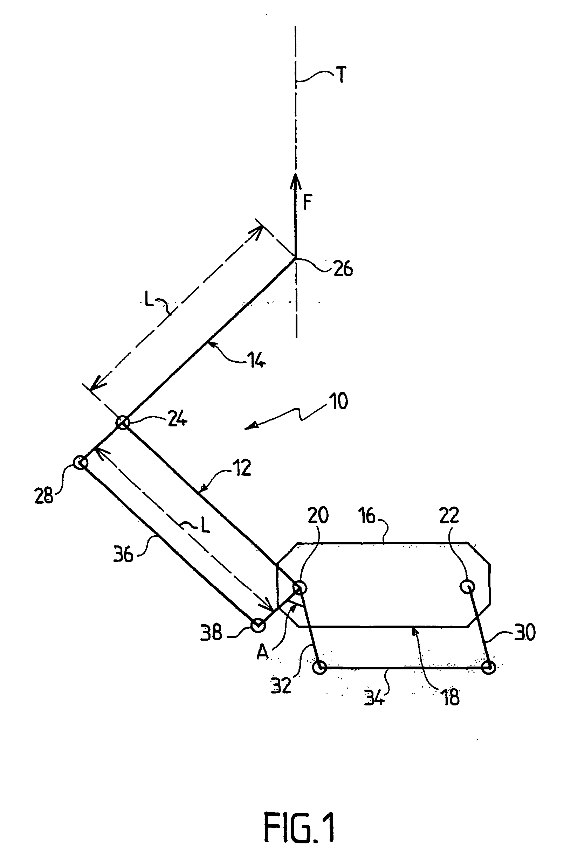

Le dispositif d'équilibrage représenté à la figure 1 comprend un mécanisme articulé 10 formé d'un bras proximal 12 et d'un bras distal 14. Le bras proximal 12 est porté par un support 16 qui est ici formé par le bâti ou corps d'un équilibreur 18.

Cet équilibreur est avantageusement du type décrit dans le brevet français n° 88 02423 déjà cité. Il comporte deux axes ou arbres de sortie 20 et 22 qui sont parallèles entre eux et, dans l'exemple, disposés horizontalement. L'équilibreur est propre à procurer un couple sinusoïdal et les deux axes de sortie 20 et 22 sont liés de manière à avoir des vitesses de rotation synchronisées, mais de sens opposés.

L'axe de sortie 20 est confondu avec l'axe de rotation du bras proximal 12. Le bras distal 14 est porté par le bras proximal 12 et est calé autour d'un axe de rotation 24 qui s'étend parallèlement à l'axe de sortie 20.

Le bras distal 14 possède une extrémité libre 26 propre à fournir une force F, et une extrémité opposée 28 formant axe d'articulation.

Le bras proximal 12 est fixé sur l'axe de sortie 20 de l'équilibreur 18 et est donc solidaire en rotation de celui-ci.

Une manivelle 30 est fixée sur l'axe de sortie 22 de l'équilibreur et est également solidaire de lui en rotation. Il en résulte que le bras proximal 12 et la manivelle 30 tournent en synchronisme, mais avec des sens opposés.

Une manivelle 32 est fixée sur l'axe de sortie 20 par des roulements (non représentés), ce qui lui permet de tourner sur cet axe sans contrainte.

Par ailleurs, une biellette 34 est fixée aux extrémités des manivelles 30 et 32 par des roulements (non représentés) permettant des rotations et créant ainsi un parallélogramme transmettant les efforts de la manivelle 30 à la manivelle 32.

Le bras distal 14 est fixé à l'extrémité du bras proximal 12 par des roulements (non représentés) lui permettant de pivoter librement et sans contrainte autour de l'axe 24.

Le bras 14 possède une longueur L, comprise entre son extrémité 26 et l'axe 24, qui est égale à la longueur du bras 12, comme définie entre les axes 20 et 24.

Une bielle 36, parallèle au bras proximal 12, est fixée d'un côté sur une manivelle 38 et de l'autre à l'extrémité 28 du bras distal 14 par l'intermédiaire de roulements (non représentés) créant ainsi un deuxième parallélogramme transmettant les efforts de la manivelle 38 au bras distal 14. Les manivelles 32 et 38 sont fixées sur l'axe de sortie 20, en étant montées libres en rotation autour de celui-ci, mais solidaires entre elles en faisant un angle adéquat A pour éviter les arcs-boutements.

Les axes de sortie 20 et 22 sont synchronisés en sens inverse et indexés de sorte que, quand le bras 12 est horizontal, la manivelle 38 le soit aussi (dans un sens ou dans l'autre suivant que la bielle 36 se trouve au-dessous ou au-dessus du bras 12). Il en résulte que la rotation des axes de sortie 20 et 22 sur 180° provoque le déplacement de l'extrémité libre 26 suivant une ligne droite sur une distance, ou amplitude, égale à 4 x L. Cette ligne droite correspond à une trajectoire rectiligne T qui, dans l'exemple, s'étend en direction verticale.

On comprendra que la bissectrice de l'angle variable formé par les bras 12 et 14 reste ainsi parallèle à elle-même.

Comme l'équilibreur 18 fournit un couple sinusoïdal, la force F transmise à l'extrémité 26 est constante et toujours parallèle au sens indiqué par la flèche. Cette force est égale à la somme des couples maximaux (bras 12 à l'horizontale) donnés par l'équilibreur 18 sur les axes de sortie 20 et 22, en étant diminuée du couple ramené par les poids des différents éléments mobiles (bras, bielles, manivelles, biellettes, paliers, roulements, etc., plus différents systèmes ou outillages embarqués) divisé par la valeur 2 x L (sauf quand les bras 12 et 14 sont verticaux, vers le haut ou vers le bas, où un phénomène d'arc-boutement se produit.

Cette force peut être utilisée pour équilibrer une masse qui sera donc "en apesanteur" sur toute la trajectoire T (ici une trajectoire verticale), ou encore pour appliquer une force, par exemple la force que doit exercer un archet de pantographe de captage de courant sur une caténaire.

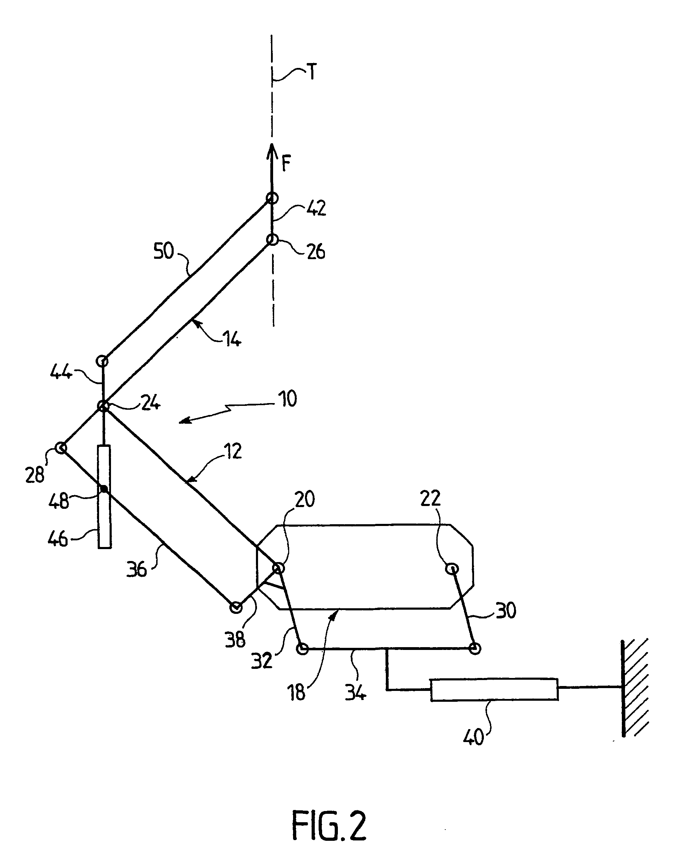

Le dispositif de la figure 2 reprend les éléments de base du dispositif de la figure 1 et les éléments communs sont désignés par les mêmes références. Il comporte en plus une motorisation additionnelle 40 appliquée, dans l'exemple, sur la biellette 34 et pouvant être utilisée à différentes fins.

Cette motorisation additionnelle peut servir notamment à déplacer le mécanisme articulé 10 de l'une à l'autre de deux positions comprenant une position de service et une position de rangement. Cette motorisation sera neutralisée lorsque le dispositif est en position de service ou de travail.

En variante, cette motorisation additionnelle peut servir aussi à équilibrer des masses additionnelles qui ne seraient pas toujours présentes ou dont les poids sont sensiblement différents, ou pour compenser une absence de masse additionnelle. A titre d'exemple, la masse principale pourrait être un préhenseur et les masses additionnelles pourraient être différentes pièces, la motorisation 40 étant limitée au poids de la pièce présente.

Cette motorisation additionnelle pourrait servir aussi à faire parcourir à l'extrémité 26 des déplacements voulus, la motorisation étant limitée aux frottements et à l'inertie, à l'exclusion du déséquilibre.

Il peut s'agir aussi de toutes combinaisons de servitude, d'équilibrage de masses additionnelles et de motorisation.

Le cas échéant, le dispositif peut être associé à un dispositif de commande d'un manipulateur mécanique à commande asservie comme enseigné par la demande de brevet français n° 0003047 des demandeurs.

On comprendra que la motorisation additionnelle 40 peut être de toute nature (pneumatique, hydraulique, électrique, etc.), linéaire ou circulaire. En outre, son point d'application n'est pas limité à la biellette 34, il peut s'agir de n'importe quelle pièce liée au mouvement, y compris les axes de sortie 20 et 22 et même l'extrémité libre 26 du bras distal.

De plus, le dispositif de la figure 2 comprend des moyens propres à assurer une orientation constante à une biellette 42 qui porte la charge (force F). Cette biellette 42 s'étend ainsi dans la direction de la trajectoire T précitée.

Ce dispositif comprend une manivelle 44 fixée à l'extrémité du bras proximal 12 par des roulements, et donc libre en rotation par rapport à celui-ci. Cette manivelle 44 porte, à son extrémité inférieure, une pièce allongée 46 comportant un trou oblong dans lequel coulisse un doigt 48 fixé sur la bielle 36 à la verticale de l'axe d'articulation 24. Quand le doigt 48 coulisse dans le trou oblong, du fait de la déformation du parallélogramme formé par les bras 12 et 14, la biellette 38 et la bielle 36, lors du fonctionnement, la manivelle 44 reste verticale. Une bielle 50 est fixée par des roulements, donc libre en rotation, à une extrémité à la manivelle 44 et, à son extrémité, à la biellette 42 de manière à rester parallèle au bras 14 et ainsi former un parallélogramme déformable.

Il est bien entendu possible de remplacer ce dispositif à doigt coulissant par un parallélogramme allant chercher une direction donnée, éventuellement la verticale, entre l'axe de sortie 20 et un point fixe.

Pour certaines applications, il est possible de construire, sur la biellette 42, un outil (non représenté) gardant une orientation déterminée, quelle que soit la position de son centre de gravité, et en particulier un outil préhenseur de pièce autorisant des changements d'orientation de cette pièce.

Il est à noter que la variation de la charge ou de l'effort désiré à l'extrémité 26 (figure 1) peut être obtenue, outre à l'aide de la motorisation 40, par le déplacement d'une charge le long de l'un des bras 12 et 14. Ce déplacement peut se faire de manière manuelle ou motorisée. Il permet de modifier le couple mécanique lié au poids des éléments mobiles et ramené au dispositif 18.

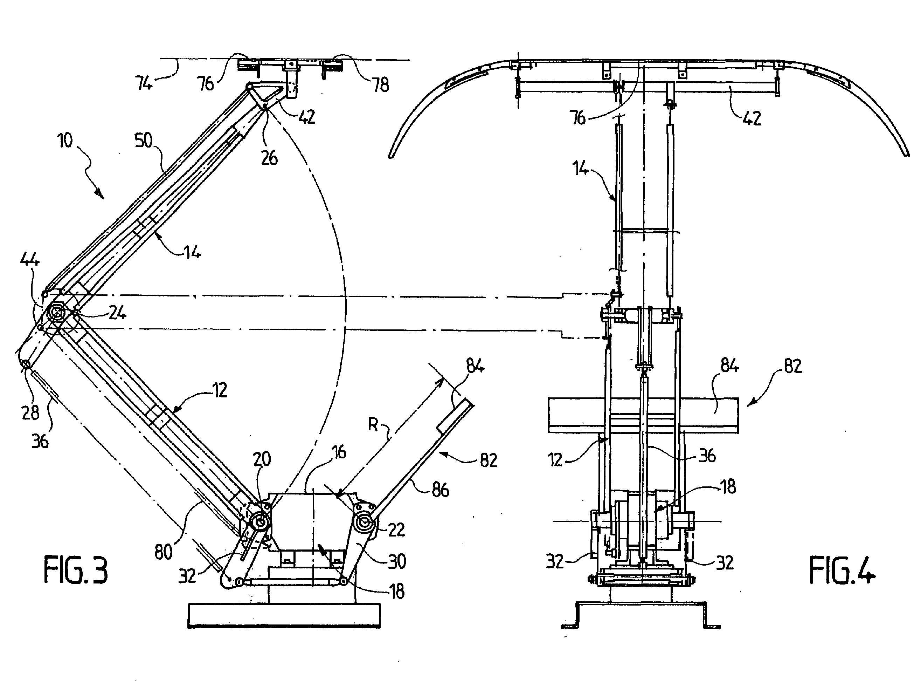

On se réfère maintenant aux figures 3 et 4 qui montrent un dispositif d'équilibrage selon l'invention qui s'apparente à celui de la figure 2 et qui est appliqué à un pantographe d'une motrice ferroviaire. Les éléments communs avec ceux de la figure 2 sont désignés par les mêmes références numériques. Le dispositif porte deux archets ferroviaires 76 et 78 propres à venir en contact avec une caténaire (non représentée).

Cette forme de réalisation vise à améliorer le comportement aux efforts horizontaux, notamment ceux induits par la résistance à la pénétration dans l'air.

La structure même du pantographe permet un excellent comportement à l'égard des efforts latéraux qui se présentent perpendiculairement à la direction d'avancement de la motrice ferroviaire, ce qui ne pose donc pas de problème particulier.

Un problème se pose plus précisément pour les efforts engendrés dans le sens de la marche de la motrice ferroviaire.

Un équilibreur du type décrit dans le brevet français 88 02423 précité offre des valeurs élevées de rendement direct et indirect, c'est-à-dire de l'ordre de 98 %. La forte bande passante de cette mécanique confère au pantographe un très bon transfert de couple de l'un à l'autre des axes de sortie. En effet, comme ces axes de sortie tournent en sens inverse, l'équilibreur va inverser, d'un axe de sortie à l'autre, le sens du couple transféré. Cette caractéristique permet ainsi de conférer une certaine stabilité à l'ensemble de la structure.

Le dispositif selon la forme de réalisation des figures- 3 et 4 diffère de celui de la figure 2 en ce qui concerne les moyens propres à assurer une orientation constante à la biellette 42. La pièce allongée 46 comportant un trou oblong (figure 2) est remplacée par un tirant 80 qui vient chercher sa direction sur le bâti de l'équilibreur.

Dans ce cas, l'effort engendré par la pénétration des archets 76 et 78 et de leurs supports dans l'air, ainsi que le frottement sur la caténaire sont sans incidence sur le comportement du pantographe sur l'axe vertical. Ceci est valable pour toute la mécanique située à l'extrémité du bras distal.

Par contre, l'effort de pénétration dans l'air du bras proximal 12 et du bras distal 14 n'est pas complètement compensé. Il reste sur l'axe de sortie 20 (qui supporte le bras proximal) un couple équivalent à celui produit par l'effort de pénétration du bras distal 14 appliqué à l'extrémité du bras proximal 12.

Il en résulte donc, suivant le sens de marche de la motrice, soit une augmentation, soit une diminution de l'effort exercé par les archets sur la caténaire. Ce phénomène perturbe donc le bon fonctionnement du pantographe et il convient donc de le prendre en compte pour l'annuler ou tout au moins diminuer ses effets.

Une première solution consisterait à déposer sur le deuxième axe de sortie 22 de l'équilibreur une structure équivalente à celle du mécanisme articulé porté par le premier axe de sortie 20, et qui de ce fait générerait le même couple, ces deux couples s'annulant dans l'équilibreur.

Une telle solution comporte plusieurs inconvénients, en particulier un alourdissement de la structure, une augmentation de son inertie, et un encombrement doublé lorsque le pantographe est replié. Au demeurant, une telle solution est très onéreuse.

Pour résoudre ce problème, l'invention propose une autre solution qui consiste à modéliser cette deuxième structure et à la remplacer par un accessoire, notamment un aileron, équivalent en aérodynamisme à cette deuxième structure.

On voit sur les figures 3 et 4, un tel accessoire 82, ici du type aileron, qui possède une géométrie choisie et qui se déplace parallèlement au bras distal 14 dont il est solidaire en rotation.

Cette accessoire 82 est disposé sur un rayon de giration R tel que sa pénétration dans l'air génère un couple égal et opposé au couple de pénétration dans l'air du mécanisme articulé 10 (pantographe), ces deux couples s'annulant dans la mécanique de liaison que comporte l'équilibreur 18.

Dans l'exemple, l'accessoire 82 comporte un profilé 84 formant aileron proprement dit et fixé à l'extrémité de deux leviers 86 qui sont solidaires en rotation des manivelles 30.

Il en résulte que ces deux leviers se déplacent en rotation, en même temps que le bras proximal, mais en sens opposé.

On a vu précédemment que le couple résiduel était généré par une force correspondant à la pénétration dans l'air du bras distal et appliquée à l'extrémité du bras proximal.

L'accessoire 82 solidaire en rotation du deuxième axe de sortie de l'équilibreur offre des conditions de frottement identiques puisque son angle de prise à l'air est le même que celui du bras distal dont il est aussi solidaire en rotation et que les variations de son bras de levier sont parfaitement symétriques à celles du bras proximal. Il génère donc un couple de nature et valeur équivalentes au couple résiduel dû à la pénétration de la structure du pantographe dans l'air. Ces deux couples s'annulent donc au travers de la mécanique de l'équilibreur.

Bien évidemment, cette modélisation sera ajustable notamment en ce qui concerne la structure et la géométrie de l'aileron et son rayon de giration, et ceci en fonction des caractéristiques aérodynamiques de la motrice et du pantographe.

De plus, l'adjonction de ce système est complémentaire à tous les points évoqués précédemment en référence aux figures 1 et 2, notamment la mise en place d'un asservissement d'efforts (voir la motorisation 90 décrite plus loin), dont elle facilite le réglage en limitant sa fonction à la seule maîtrise de l'inertie du pantographe.

L'adjonction de cet accessoire est sans effet appréciable sur l'inertie globale du pantographe. Son poids est entièrement pris en compte par l'équilibreur.

Enfin, cet accessoire permet de corriger la distorsion due au fait que, contrairement aux hypothèses prises pour les calculs, et bien que le bras distal et le bras proximal aient la même longueur, l'effort de pénétration dans l'air du bras distal n'est pas identique à celui du bras proximal, ceci notamment en raison de la présence d'un carénage sur la motrice et de la bielle 36.

Dans une variante de réalisation, l'accessoire peut être monté sur la manivelle 32, elle-même solidaire en rotation du deuxième axe de sortie de l'équilibreur, cette disposition permettant de réduire l'encombrement de l'accessoire replié. Dans ce cas, l'accessoire est monté fou sur le premier axe de sortie 20.

Plus généralement, tout moyen de compensation de l'effort de pénétration dans l'air de la structure du pantographe, monté solidaire en rotation du deuxième axe de sortie de l'équilibreur, peut être disposé indifféremment sur le premier axe de sortie, ou le deuxième axe de sortie de l'équilibreur, voire sur les deux.

La structure de l'accessoire n'est pas limitée à un aileron comme représenté sur les figures 3 et 4, mais peut s'apparenter à une structure plus proche de celle du bras distal, dont elle modélise la pénétration dans l'air.

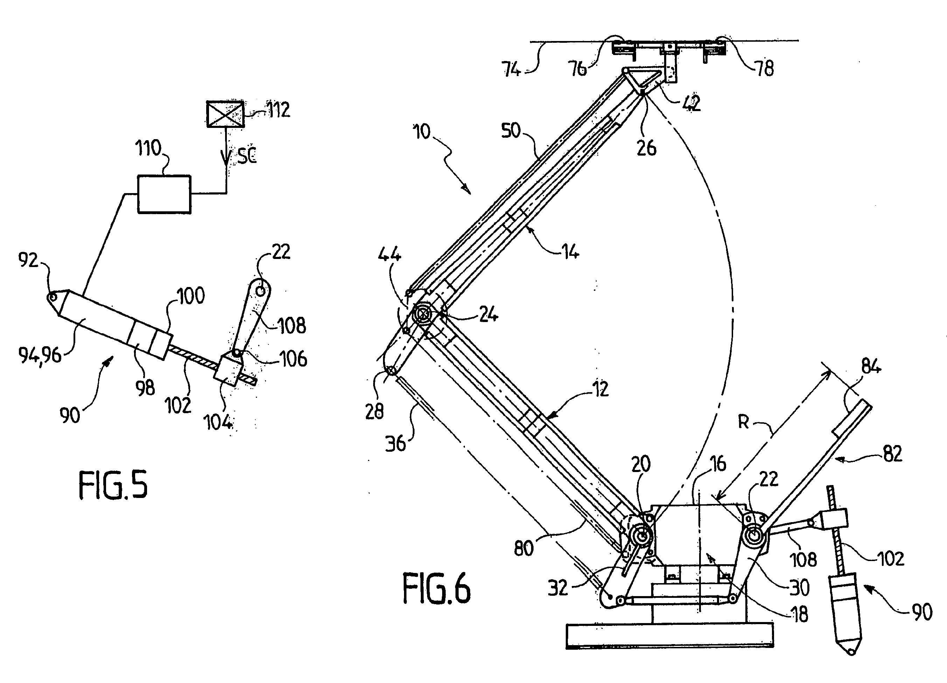

On se réfère maintenant à la figure 5 qui montre des moyens de motorisation 90 utilisés pour l'asservissement du mécanisme articulé 10, lequel est avantageusement constitué par un pantographe ferroviaire, comme montré à la figure 6.

Ces moyens de motorisation avec asservissement sont avantageusement combinés à un équilibreur mécanique 18 à deux axes de sortie 20 et 22 tels que décrits précédemment. Ces moyens de motorisation 90 comprennent un ensemble articulé autour d'un axe 92 et comprenant un moteur électrique 94 couplé à une dynamo tachymétrique 96. Ce moteur 94 entraîne, par l'intermédiaire d'un réducteur 98 et d'un embrayage 100, une vis sans fin 102 qui coopère avec un écrou 104. Cet écrou 104 est articulé en 106 à l'extrémité d'une manivelle 108 qui est couplée à l'un des axes de sortie 20 et 22 de l'équilibreur 18. Avantageusement, cet accouplement assurera l'isolation entre le potentiel électrique de l'équilibreur (celui de la caténaire) et celui de la vis sans fin (masse de la motrice).

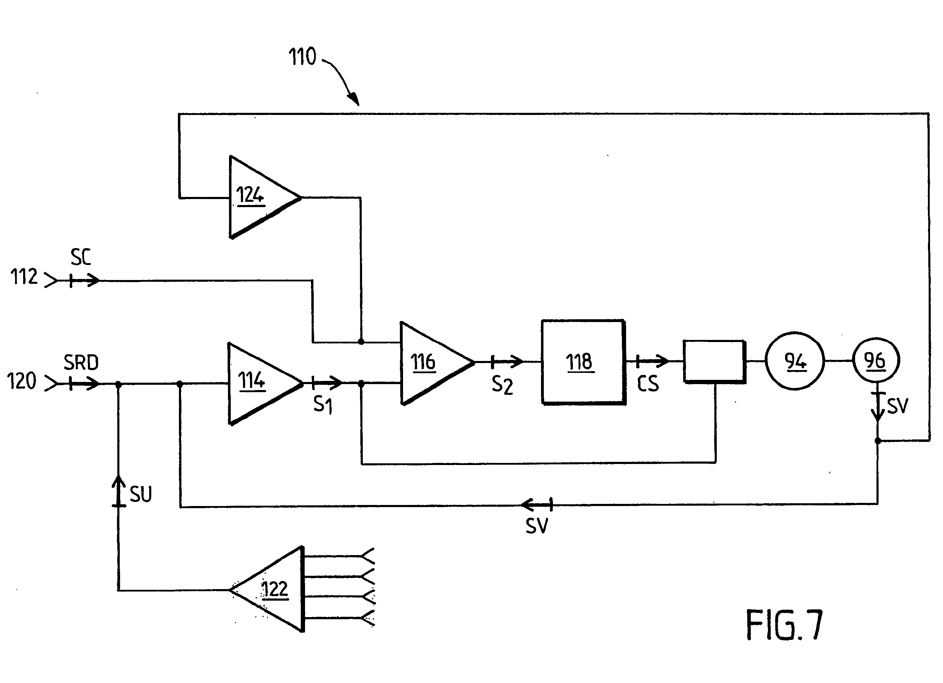

Un circuit d'asservissement 110, qui sera décrit plus loin en référence à la figure 7, contrôle le moteur électrique 94 à partir d'un signal de commande SC délivré par un capteur d'effort 112 porté à l'extrémité libre du bras distal 14 du mécanisme articulé 10. Comme indiqué précédemment, ces moyens de motorisation trouvent avantageusement une application dans le cas d'un pantographe ferroviaire comme montré à la figure 6. Le pantographe de la figure 6 correspond à celui des figures 3 et 4. Dans cet exemple particulier, le pantographe ferroviaire comprend un aileron 82 analogue à celui décrit précédemment. La manivelle 108 est avantageusement solidaire en rotation de l'aileron, c'est-à-dire plus particulièrement des leviers 86, lesquels sont solidaires en rotation de l'axe de sortie 22 de l'équilibreur 18.

La mise en place de cet asservissement vise notamment à répondre au problème de la dissociation des systèmes qui génèrent des forces de pression sur la caténaire 74 et de la maîtrise de l'inertie de la structure du pantographe. Ceci est destiné à pallier les incidences des variations de parallélisme entre la caténaire et la voie ferrée, qu'elles soient dues à la géométrie même de la ligne ou aux oscillations que provoque sur la caténaire le passage d'un premier pantographe et que doivent suivre d'éventuels pantographes suiveurs.

Ces moyens de motorisation à asservissement sont, dans l'exemple, montés sur l'équilibreur mécanique 18. Un tel équilibreur mécanique génère de manière intrinsèque un couple sinusoïdal équilibrant à 98% la masse de la structure. Dans le cas du pantographe, la cinématique induite permet, elle aussi, d'assurer de manière intrinsèque la génération de l'effort sur la caténaire avec la même précision, et ceci quelle que soit la position de déploiement de la structure du pantographe. En outre, les faibles valeurs d'inertie et de frottement de l'équilibreur, ainsi que sa forte bande passante, le rendent particulièrement adapté à une motorisation de ce type.

La structure du pantographe construite autour de l'équilibreur 18 permet de compenser, dans de très bonnes conditions, les perturbations des efforts horizontaux de toutes sortes auxquelles elle est soumise. Il en résulte que la relation entre l'actionneur et l'effort sur les archets qu'il génère reste pratiquement indépendante de la vitesse du train, du sens de marche du pantographe et de sa hauteur de déploiement.

La motorisation 90 permet de prendre en charge essentiellement les efforts inertiels nécessaires au déplacement vertical de la structure. Ces moyens de motorisation ont des performances dynamiques particulièrement intéressantes. Ils sont à même de compenser, si nécessaire, les efforts résiduels provoqués notamment par la pénétration dans l'air de la structure du pantographe, de préférence en coordination avec l'aileron 82 décrit précédemment. C'est la raison pour laquelle ces moyens de motorisation 90 sont avantageusement combinés au pantographe avec aileron, comme on le voit sur la figure 6. En outre, ces moyens de motorisation permettent de compenser de manière analogue, et si nécessaire, tout ou partie de l'équilibrage ou de générer tout ou partie des efforts des archets sur la caténaire.

Conformément à l'invention, la chaîne cinématique de l'asservissement est homocinétique. Il en résulte que, quelle que soit la position du pantographe, le gain mécanique entre le couple moteur et l'accélération linéaire des archets sera pratiquement constant.

Cette cinématique est obtenue en recréant un système bielle/manivelle (manivelle 108) qui transforme un effort constant en couple sinusoïdal, lequel couple est retransformé en effort constant par la structure du pantographe au niveau des archets 76 et 78.

Dans ces conditions, la sinusoïde de la manivelle 108 est synchronisée, c'est-à-dire en phase, avec celle du pantographe.

Le réducteur 98 (figure 5) est avantageusement constitué par un réducteur à trains de pignons ayant un rapport inverse à celui de l'amplification entre la structure du pantographe et la manivelle (manivelle 108) de motorisation.

La vis sans fin 102 est avantageusement une vis de type réversible à haut rendement inverse. Pour cela, on préfère utiliser une vis à billes à filets roulés, de préférence une vis ayant un diamètre de 30 mm et un pas de 30 mm.

Dans l'exemple représenté, la vis est réversible, et c'est la raison pour laquelle on prévoit aussi un réducteur. Mais, en variante, on pourra utiliser une vis à pas plus petit, sans réducteur, mais dont le rendement inverse serait moins élevé.

L'embrayage 100 permet de débrayer les moyens de motorisation 90, par exemple en cas de panne de ces derniers, pour permettre une marche dégradée du pantographe. Cela signifie que, dans un tel mode de fonctionnement, les performances du pantographe seraient analogues à celles d'un pantographe non asservi.

On se réfère maintenant à la figure 7 pour décrire un exemple de moyens d'asservissement 110. On retrouve sur la figure 7 le moteur 94 et la dynamo tachymétrique 96. La dynamo tachymétrique entraînée par le moteur délivre un signal de vitesse SV.

Le circuit 110 comprend en outre un premier amplificateur opérationnel 114 (boucle de vitesse) recevant ce signal de vitesse SV et produisant un premier signal de sortie S1 qui est envoyé à un deuxième amplificateur opérationnel 116 (boucle de courant). Ce deuxième amplificateur opérationnel délivre un deuxième signal de sortie S2 qui est reçu par un amplificateur de puissance 118, lequel délivre un courant de sortie CS envoyé au moteur électrique 94 et dont l'image est envoyée au deuxième amplificateur opérationnel 116. Le capteur d'effort 112 (porté par les archets du pantographe) délivre un signal de commande SC qui est appliqué à l'entrée du deuxième amplificateur opérationnel 116.

Ainsi, le contrôle de l'effort archets-caténaire est appliqué au niveau de la boucle de courant de l'asservissement (amplificateur opérationnel 116). Ceci permet un très court temps de réponse de l'ensemble et une gestion de grandeurs parfaitement homogènes puisque le couple délivré par le moteur 94 est proportionnel au signal de commande de cette boucle.

Par ailleurs, il est prévu une opération de déploiement et de repliement 120 propre à recevoir un signal de commande SRD appliqué au premier amplificateur opérationnel (boucle de vitesse) pour réaliser le repliement ou le déploiement du mécanisme articulé 10, c'est-à-dire dans l'exemple du pantographe.

De plus, un signal d'urgence SU est envoyé par un dispositif de sécurité 122 fonctionnant en cas de rupture du caténaire. Ce dispositif de sécurité envoie le signal d'urgence pour replier la structure du pantographe dans l'un ou l'autre des cas suivants (donnés à titre d'exemple) :
- disparition prolongée de l'effort archets-caténaire en phase de fonctionnement,
- arrivée intempestive de la structure à son point haut,
- disparition prolongée du courant d'alimentation de la motrice,
- envoi du signal d'urgence par tout autre système de détection.

Il peut être intéressant, dans certains cas, d'effectuer un correctif entre le signal SC délivré par le capteur d'effort et l'effort réel exercé par les archets sur la caténaire. Ainsi il permet de tenir compte des forces inertielles dues à la mécanique placée en aval du capteur et notamment aux archets. Pour cela on prévoit des moyens correctifs 124 propres à délivrer un correctif entre le signal de commande SC délivré par le capteur d'effort 112 et l'effort réel s'exerçant sur la charge F, ici sur la caténaire. Ces moyens correctifs comprennent des moyens dérivateurs propres à dériver par rapport au temps les variations de vitesse prélevées sur la dynamo tachymétrique 96 et à les appliquer à l'entrée du deuxième amplificateur opérationnel 116. Ce signal, linéaire à l'accélération, va générer un courant, donc un couple, propre à compenser les efforts inertiels définis ci-dessus qui sont eux-mêmes proportionnels à ladite accélération.

Le système d'asservissement utilisé en servitude pour le repliement ou le déploiement de la structure, est, comme déjà indiqué, doublé par un autre système assurant le repli du pantographe en cas de défection du premier système, par exemple par la motorisation additionnelle 40 montrée à la figure 2.

Il doit être entendu que les moyens de motorisation avec asservissement, tels que décrit précédemment, peuvent s'appliquer en combinaison à d'autres moyens d'équilibrage.

De plus, ils ne se limitent pas à l'application à un mécanisme articulé du type pantographe ferroviaire.

Pour la bonne compréhension du dessin (figure 6), on a disposé le système de motorisation d'asservissement verticalement sur l'axe portant l'aileron. En pratique, et pour des raisons d'encombrement, ce système de motorisation sera monté indifféremment sur l'un des deux axes de sortie de l'équilibreur et sera disposé horizontalement à côté de celui-ci.

On comprendra que l'objet de l'invention possède de multiples applications, notamment pour des manipulateurs, dispositifs de transfert, pantographes ferroviaires, etc.

Les moyens d'équilibrage du dispositif de l'invention font avantageusement appel à un équilibreur du type décrit par le brevet français 88 02 423 précité.

Bien entendu, il est possible d'utiliser d'autres moyens d'équilibrage, à partir du moment où ceux-ci possèdent une bande passante élevée.

## Revendications

1. Dispositif d'équilibrage d'une force, du type comprenant un mécanisme articulé (10) formé d'un bras proximal (12) porté par un support et calé sur un premier axe de rotation (20) et d'un bras distal (14) porté par le bras proximal et calé sur un deuxième axe de rotation (24) qui s'étend parallèlement au premier axe, le bras distal ayant une extrémité libre (26) portant une charge (F);
un équilibreur (18) comprenant
des premiers moyens d'équilibrage à forte bande passante ayant un axe de sortie (20) et agissant sur le bras proximal (12), des seconds moyens d'équilibrage à forte bande passante ayant un axe de sortie (22) et agissant sur le bras distal (14), ainsi que des moyens de coordination à forte bande passante, interposés entre les premiers moyens d'équilibrage et les seconds moyens d'équilibrage pour coordonner les mouvements de rotation respectifs du bras proximal et du bras distal.

2. Dispositif selon la revendication 1, **caractérisé en ce** l'équilibreur (18) est propre à procurer un couple mécanique sinusoïdal et possède deux axes de sortie (20, 22) qui ont des vitesses de rotation synchronisées mais de sens opposés, et en ce que ces axes de sortie (20, 22) sont liés en rotation respectivement avec le premier axe de rotation (20) du bras proximal (12) et avec le deuxième axe de rotation (24) du bras distal (14).

3. Dispositif selon l'une des revendications 1 et 2, **caractérisé en ce que** les moyens d'équilibrage comprennent des moyens de motorisation (40; 90).

4. Dispositif selon l'une des revendications 1 à 3, **caractérisé en ce que** l'un (20) des deux axes de sortie constitue l'axe de rotation du bras proximal (12), tandis que l'autre axe de sortie (22) est couplée à l'axe de rotation (24) du bras distal (14) par des moyens de transmission, en particulier des moyens ayant au moins un parallélogramme déformable.

5. Dispositif selon l'une des revendications 1 à 4, **caractérisé en ce que** le bras proximal (12) et le bras distal (14) ont une même longueur (L).

6. Dispositif selon l'une des revendications 1 à 5, **caractérisé en ce qu'**il comprend une motorisation additionnelle (40) formée d'au moins un actionneur couplé à au moins un organe mobile (34) du dispositif.

7. Dispositif selon la revendication 6, **caractérisé en ce que** cette motorisation additionnelle (40) est propre à déplacer le mécanisme articulé (10) de l'une à l'autre de deux positions qui comprennent une position de service et une position de rangement.

8. Dispositif selon l'une des revendications 1 à 7, **caractérisé en ce que** l'un au moins des premiers moyens d'équilibrage et des seconds moyens d'équilibrage comprend des moyens de réglage propres à faire varier la charge (F) appliquée à l'extrémité libre (26) du bras distal (14).

9. Dispositif selon la revendication 8, **caractérisé en ce que** les moyens de réglage comprennent une masse déplaçable sur le bras proximal (12) ou le bras distal (14).

10. Dispositif selon l'une des revendications 1 à 9, **caractérisé en ce qu'**il comprend une motorisation-additionnelle (40; 90) commandée par un capteur d'effort placé en un endroit choisi pour permettre soit d'assister un opérateur dans le cas d'un déplacement manuel, soit d'assurer une force constante sur un organe donné.

11. Dispositif selon l'une des revendications 1 à 10, **caractérisé en ce que** l'extrémité libre (26) du bras distal (14) porte les archets (76, 78) d'un pantographe propre à capter l'énergie électrique d'une caténaire (74) en sorte que la charge est ici formée par la force qu'exercent les archets sur la caténaire.

12. Dispositif selon l'une des revendications 1 à 10, prises en combinaison avec la revendication 11, **caractérisé en ce qu'**il comprend au moins un accessoire (82), notamment un aileron, qui est monté solidaire en rotation du deuxième axe de sortie (22), en étant soit monté sur ce deuxième axe de sortie, soit monté fou sur le premier axe de sortie (20), qui possède une géométrie choisie et qui se déplace parallèlement au bras distal (14) dont il est aussi solidaire en rotation, cet accessoire (82) étant disposé sur un rayon de giration (R) tel que sa pénétration dans l'air génère un couple égal et opposé au couple de pénétration dans l'air du mécanisme articulé (10), ces deux couples s'annulant dans la mécanique de liaison.

13. Dispositif selon l'une des revendications 1 à 12, **caractérisé en ce qu'**il comporte une motorisation d'asservissement (90) comprenant un moteur électrique (94) couplé à une vis sans fin (102) coopérant avec un écrou (104), cet écrou étant porté par une manivelle (108) couplée à l'un du premier axe de sortie (20) et du deuxième axe de sortie (22), et **en ce que** des moyens d'asservissement (110) contrôlent le moteur électrique (94) à partir d'un signal de capteur d'effort (112) porté à l'extrémité libre du bras distal (14).

14. Dispositif selon la revendication 13, **caractérisé en ce que** la vis sans fin (102) est une vis réversible entraînée par le moteur électrique (94) par l'intermédiaire d'un réducteur (98) et **en ce qu'**un mécanisme d'embrayage (100) est intercalé entre le réducteur (98) et la vis sans fin (102).

15. Dispositif selon l'une des revendications 13 et 14, dans lequel les moyens d'asservissement comprennent une dynamo tachymétrique (96) entraînée par le moteur électrique (94) et propre à délivrer un signal de sortie (SV), un premier amplificateur opérationnel (114) (boucle de vitesse) recevant ce signal de vitesse (SV) et produisant un premier signal de sortie (S1), un deuxième amplificateur opérationnel (116) (boucle de courant) recevant le premier signal de sortie (S1) et délivrant un deuxième signal de sortie (S2), un amplificateur de puissance (118) recevant ce deuxième signal de sortie (S2) et délivrant un courant de sortie (CS) envoyé au moteur électrique (94) et dont l'image est envoyée au deuxième amplificateur opérationnel (116), **caractérisé en ce que** le signal de commande (SC) délivré par le capteur d'effort (112) est appliqué à l'entrée du deuxième amplificateur opérationnel (116) (boucle de courant).

16. Dispositif selon l'une des revendications 13 à 15, **caractérisé en ce que** la motorisation d'asservissement (90) constitue un système de servitude afin d'assurer le repliement et le déploiement (120) du mécanisme articulé (10).

17. Dispositif selon la revendication 16, **caractérisé en ce que** le mécanisme de repliement et de déploiement (120) est propre à recevoir un signal de commande (SRD) appliqué au premier amplificateur opérationnel (114) (boucle de vitesse) pour réaliser le repliement ou le déploiement du mécanisme articulé (10), ce signal de commande (SRD) étant prioritaire sur le signal du capteur d'effort, ramené à la boucle de courant.

18. Dispositif selon la revendication 16, **caractérisé en ce que** le mécanisme de repliement et de déploiement (120) est propre à recevoir un signal d'urgence (SU) appliqué au premier amplificateur opérationnel (114) (boucle de vitesse) pour réaliser le repliement du mécanisme articulé (10) en cas d'urgence, ce signal d'urgence (SU) étant prioritaire sur le signal du capteur d'effort, ramené à la boucle de courant.

19. Dispositif selon l'une des revendications 15 à 18, **caractérisé en ce que** les moyens d'asservissement (110) comprennent des moyens correctifs (124) propres à effectuer un correctif entre le signal de commande (SC) délivré par le capteur d'effort (112) et l'effort réel s'exerçant sur la charge (F), ces moyens correctifs comprenant des moyens dérivateurs propres à dériver par rapport au temps les variations de vitesse prélevées sur la dynamo tachymétrique (96) et à les appliquer à l'entrée du deuxième amplificateur opérationnel (116).

## Claims

1. Device for balancing a force, of the type comprising
an articulated mechanism (10) formed by a proximal arm (12) carried by a support and keyed on a first hinge pin (20) and a distal arm (14) carried by the proximal arm and keyed on a second hinge pin (24) extending parallel to the first pin, the distal arm having a free end (26) carrying a load (F) ;
a balancer (18) comprising first high bandwidth balancing means having an output shaft (20) and acting on the proximal arm (12), second high bandwidth balancing means having an output shaft (22) and acting on the distal arm (14), as well as high bandwidth coordinating means interposed between the first balancing means and the second balancing means to coordinate the respective rotational movements of the proximal arm and of the distal arm.

2. Device according to claim 1, **characterised in that** the balancer (18) is capable of providing a sinusoidal mechanical torque and has two output shafts (20, 22) which have speeds of rotation which are synchronised but in opposite directions, and **in that** these output shafts (20, 22) are rotationally engaged with the first hinge pin (20) of the proximal arm (12) and with the second hinge pin (24) of the distal arm (14) respectively.

3. Device according to either of claims 1 and 2, **characterised in that** the balancing means comprise motorisation means (40; 90).

4. Device according to any of claims 1 to 3, **characterised in that** one (20) of the two output shafts forms the hinge pin of the proximal arm (12) whereas the other output shaft (22) is coupled to the hinge pin (24) of the distal arm (14) by transmission means, in particular means having at least one deformable parallelogram.

5. Device according to any of claims 1 to 4, **characterised in that** the proximal arm (12) and the distal arm (14) have the same length (L).

6. Device according to any of claims 1 to 5, **characterised in that** it comprises an additional motorisation means (40) formed by at least one actuator coupled to at least one moving part (34) of the device.

7. Device according to claim 6, **characterised in that** this additional motorisation means (40) is capable of moving the articulated mechanism (10) from one of two positions, which include a service position and a storage position, to the other.

8. Device according to any of claims 1 to 7, **characterised in that** at least one of the first balancing means and the second balancing means comprises adjusting means capable of varying the load (F) applied to the free end (26) of the distal arm (14).

9. Device according to claim 8, **characterised in that** the adjustment means comprise a mass which is capable of moving on the proximal arm (12) or the distal arm (14).

10. Device according to any of claims 1 to 9, **characterised in that** it comprises an additional motorisation means (40 ; 90) controlled by a force sensor placed at a position which is selected for assisting an operator in the case of a manual displacement or to apply a constant force to a given part.

11. Device according to any of claims 1 to 10, **characterised in that** the free end (26) of the distal arm (14) carries the bows (76, 78) of a pantograph capable of collecting the electrical energy from a catenary (74) such that the load here is formed by the force exerted on the catenary by the bows.

12. Device according to any of claims 1 to 10, taken in combination with claim 11, **characterised in that** it comprises at least one accessory (82), in particular an aerofoil (82), which is rotationally engaged with the second output shaft (22) while being mounted either on this second output shaft or idly on the first output shaft (20), which has selected geometry and moves parallel to the distal arm (14) with which it is rotationally engaged, this accessory (82) being disposed on a radius of gyration (R) such that its penetration of the air generates a torque equal and opposed to the torque of penetration of the air of the articulated mechanism (10), these two torques cancelling one another in the connecting mechanics.

13. Device according to any of claims 1 to 12, **characterised in that** it comprises a servocontrol motorisation means (90) comprising an electric motor (94) coupled to an endless screw (102) cooperating with a nut (104), this nut being carried by a crank (108) coupled to one of the first output shaft (20) and the second output shaft (22), and **in that** servocontrol means (110) control the electric motor (94) on the basis of a signal from a force sensor (112) carried at the free end of the distal arm (14).

14. Device according to claim 13, **characterised in that** the endless screw (102) is a reversible screw driven by the electric motor (94) via a reduction gear (98) and **in that** a clutch mechanism (100) is interposed between the reduction gear (98) and the endless screw (102).

15. Device according to any of claims 13 and 14 in which the servocontrol means comprise a tachymetric dynamo (96) driven by the electric motor (94) and capable of transmitting an output signal (SV), a first operational amplifier (114) (speed loop) receiving this speed signal (SV) and producing a first output signal (S1), a second operational amplifier (116) (current loop) receiving the first output signal (S1) and transmitting a second output signal (S2), a power amplifier (118) receiving this second output signal (S2) and transmitting an output current (CS) sent to the electric motor (94) and from which the image is sent to the second operational amplifier (116), **characterised in that** the control signal (SC) transmitted by the force sensor (112) is applied to the input of the second operational amplifier (116) (current loop).

16. Device according to any of claims 13 to 15, **characterised in that** the servocontrol motorisation means (90) forms an ancillary system for the folding and unfolding (120) of the articulated mechanism (10).

17. Device according to claim 16, **characterised in that** the folding and unfolding mechanism (120) is capable of receiving a control signal (SRD) applied to the first operational amplifier (114) (speed loop) to bring about the folding or unfolding of the articulated mechanism (10), this control signal (SRD) having priority over the signal from the force sensor brought to the current loop.

18. Device according to claim 16, **characterised in that** the folding and unfolding mechanism (120) is capable of receiving an emergency signal (SU) applied to the first operational amplifier (114) (speed loop) to bring about the folding of the articulated mechanism (10) in an emergency, this emergency signal (SU) having priority over the signal from the force sensor, brought to the current loop.

19. Device according to any of claims 15 to 18, **characterised in that** the servocontrol means (110) comprise corrective means (124) capable of performing a corrective action between the control signal (SC) transmitted by the force sensor (112) and the actual force applied to the load (F), these corrective means comprising differentiating means capable of differentiating the speed variations recorded on the tachymetric dynamo (96) over time and applying them to the input of the second operational amplifier (116).

## Patentansprüche

1. Kraftausgleichsvorrichtung des Typs umfassend
einen gelenkigen Mechanismus (10), gebildet aus einen proximalen Arm (12), getragen durch einen Träger und befestigt auf einer Rotationsachse (20), und einen distalen Arm (14), getragen durch den proximalen Arm und befestigt auf einer zweiten Rotationsachse (24), die sich parallel zu der ersten Achse erstreckt, wobei der distale Arm ein eine Belastung (F) tragendes freies Ende (26) hat,
eine Ausgleichseinheit (18) umfassend, erste, auf den proximalen Arm (12) einwirkende Ausgleichseinrichtungen von großer Bandbreite mit einer Ausgangsachse (20), zweite, auf den distalen Arm (14) einwirkende Ausgleichseinrichtungen von großer Bandbreite mit einer Ausgangsachse (22), sowie Koordinationseinrichtungen von großer Bandbreite, eingefügt zwischen den ersten Ausgleichseinrichtungen und den zweiten Ausgleichseinrichtungen, um die jeweiligen Rotationsbewegungen des proximalen Arms und des distalen Arms zu koordinieren.

2. Vorrichtung nach Anspruch 1, **dadurch gekennzeichnet, dass** die Ausgleichseinheit (18) fähig ist, ein sinusförmiges mechanisches Moment zu liefern, und zwei Ausgangsachsen (20, 22) besitzt, die synchronisierte aber gegensinnige Rotationsgeschwindigkeiten haben, und dadurch, dass diese Ausgangsachsen (20, 22) rotationsbezogen jeweils mit der ersten Rotationsachse (20) des proximalen Arms (12) und mit der zweiten Rotationsachse (22) des distalen Arms (14) verbunden sind.

3. Vorrichtung nach einem der Ansprüche 1 und 2, **dadurch gekennzeichnet, dass** die Ausgleichseinrichtungen Motorisierungseinrichtungen (40; 90) umfassen.

4. Vorrichtung nach einem der Ansprüche 1 bis 3, **dadurch gekennzeichnet, dass** eine (20) der beiden Ausgangsachsen die Rotationsachse des proximalen Arms (12) bildet, während die andere Ausgangsachse (22) mit der Rotationsachse (24) des distalen Arms (14) durch Übertragungseinrichtungen verbunden ist, insbesondere Einrichtungen, die wenigstens ein verformbares Parallelogramm umfassen.

5. Vorrichtung nach einem der Ansprüche 1 bis 4, **dadurch gekennzeichnet, dass** der proximale Arm (12) und der distale Arm (14) dieselbe Länge (L) haben.

6. Vorrichtung nach einem der Ansprüche 1 bis 5, **dadurch gekennzeichnet, dass** sie eine zusätzliche Motorisierung (40) umfasst, gebildet durch wenigstens einen Aktuator, gekoppelt mit wenigstens einem beweglichen Organ (34) der Vorrichtung.

7. Vorrichtung nach Anspruch 6, **dadurch gekennzeichnet, dass** diese zusätzliche Motorisierung (40) fähig ist, den gelenkigen Mechanismus (10) von der einen von zwei Stellungen, die eine Betriebsstellung und eine Ruhestellung umfassen, in die andere zu verschieben.

8. Vorrichtung nach einem der Ansprüche 1 bis 7, **dadurch gekennzeichnet, dass** wenigstens eine der ersten Ausgleichseinrichtungen und der zweiten Ausgleichseinrichtungen Regelungseinrichtungen umfassen, fähig die auf das freie Ende (26) des distalen Arms (14) ausgeübte Belastung zu variieren.

9. Vorrichtung nach Anspruch 8, **dadurch gekennzeichnet, dass** die Regelungseinrichtungen eine Masse umfassen, verschiebbar auf dem proximalen Arm (12) oder dem distalen Arm (14).

10. Vorrichtung nach einem der Ansprüche 1 bis 9, **dadurch gekennzeichnet, dass** sie eine zusätzliche Motorisierung (40; 90) umfasst, gesteuert durch einen an einer ausgewählten Stelle angeordneten Drucksensor und dazu dienend, entweder im Falle einer manuellen Verschiebung eine Bedienungsperson zu unterstützen oder eine konstante Kraft auf ein bestimmtes Organ auszuüben.

11. Vorrichtung nach einem der Ansprüche 1 bis 10, **dadurch gekennzeichnet, dass** das freie Ende (26) des distalen Arms (14) die Bügel (76, 78) eines Stromabnehmers zur Stromabnahme von einer Oberleitung (74) trägt, wobei die Belastung hier durch die Kraft gebildet wird, welche die Bügel auf die Oberleitung ausüben.

12. Vorrichtung nach einem der Ansprüche 1 bis 10, kombiniert mit Anspruch 11, **dadurch gekennzeichnet, dass** sie wenigstens eine Sonderausrüstung (82) umfasst, insbesondere einen Flügel, so montiert, dass er bezüglich der Rotation mit der zweiten Ausgangsachse (22) solidarisch ist, indem er entweder auf diese zweite Ausgangsachse montiert ist, oder lose auf die erste Ausgangsachse (20) montiert ist, und der eine gewählte Geometrie besitzt und sich parallel zum distalen Arm (14) verschiebt, mit dem er auch bezüglich der Rotation solidarisch ist, wobei dieses Sonderausrüstung (82) einen solchen Trägheitsradius (R) aufweist, dass ihr Luftwiderstand ein Moment gleich dem Luftwiderstandsmoment des Gelenkmechanismus (10), aber diesem entgegengesetzt, erzeugt und beide Momente sich in der Verbindungsmechanik gegenseitig aufheben.

13. Vorrichtung nach einem der Ansprüche 1 bis 12, **dadurch gekennzeichnet, dass** sie eine Regelungsmotorisierung (90) umfasst, mit einem Elektromotor (94), gekoppelt mit einer Schnecke (102), die mit einer Mutter (104) zusammenwirkt, getragen von einer Kurbel (108), die mit einer der Ausgangsachsen, der ersten (20) und der zweiten (22), gekoppelt ist, und dadurch, dass Regelungseinrichtungen (110) den Elektromotor (94) aufgrund eines Signals des durch das freie Ende des durch den distalen Arm (14) getragenen Drucksensors (112) steuern.

14. Vorrichtung nach Anspruch 13, **dadurch gekennzeichnet, dass** die Schnecke (102) eine reversible Schnecke ist, angetrieben durch den Elektromotor (94) mittels einer Reduktionsgetriebes (98), und dadurch, dass ein Kupplungsmechanismus (100) zwischen dem Reduktionsgetriebe (98) und der Schnecke (102) eingebaut ist.

15. Vorrichtung nach einem der Ansprüche 13 und 14, bei der die Regeleinrichtungen einen Tachodynamo (96) umfassen, angetrieben durch einen Elektromotor (94) und fähig, ein Ausgangssignal (SV) zu liefern, wobei ein erster Operationsverstärker (114) (Geschwindigkeitsschleife) dieses Geschwindigkeitssignal (SV) empfängt und ein erstes Ausgangssignal (S1) liefert, ein zweiter Operationsverstärker (116) (Stromschleife) das erste Ausgangssignal (S1) empfängt und ein zweites Ausgangssignal (S2) liefert, ein Leistungsverstärker (118) dieses zweite Signal (S2) empfängt und einen Ausgangsstrom (CS) liefert, der in den Elektromotor (94) eingespeist wird und von dem ein Bild zum zweiten Operationsverstärker (116) gesendet wird, **dadurch gekennzeichnet, dass** das durch den Drucksensor (112) gelieferte Steuersignal (SC) an den Eingang des zweiten Operationsverstärkers (116) (Stromschleife) gelegt wird.

16. Vorrichtung nach einem der Ansprüche 13 bis 15, **dadurch gekennzeichnet, dass** die Regelungsmotorisierung (90) ein Regelungssystem zum Falten und Entfalten (120) des Gelenkmechanismus (10) bildet.

17. Vorrichtung nach Anspruch 16, **dadurch gekennzeichnet, dass** der Faltungs- und Entfaltungsmechanismus (120) ein an den ersten Operationsverstärker (114) (Geschwindigkeitsschleife) angelegtes Signal (SRD) empfangen kann, um das Falten oder Entfalten des Gelenkmechanismus (10) auszuführen, wobei dieses Steuersignal (SRD) prioritär ist gegenüber dem zur Stromschleife zurückgeführten Signal des Drucksensors.

18. Vorrichtung nach Anspruch 16, **dadurch gekennzeichnet, dass** der Faltungs- und Entfaltungsmechanismus (120) ein an den ersten Operationsverstärker (114) (Geschwindigkeitsschleife) angelegtes Notsignal (SU) empfangen kann, um in einem Notfall das Falten des Gelenkmechanismus (10) auszuführen, wobei dieses Notsignal (SU) prioritär ist gegenüber dem zur Stromschleife zurückgeführten Signal des Drucksensors.

19. Vorrichtung nach einem der Ansprüche 15 bis 18, **dadurch gekennzeichnet, dass** die Regelungseinrichtungen (110) Korrektiveinrichtungen (124) umfassen, fähig zur Realisierung eines Korrektivs zwischen dem Steuersignal (SC), geliefert durch den Drucksensor (112), und dem auf die bzw. in der Belastung (F) wirkenden realen Druck, wobei diese Korrektiveinrichtungen Ableitungseinrichtungen umfassen, fähig die dem Tachodynamo (96) entnommenen Geschwindigkeitsänderungen zeitbezogen abzuleiten und an den Eingang des zweiten Operationsverstärkers (116) anzulegen.
